# NEUE EUROPÄISCHE PATENTSCHRIFT

(11) **EP 2 605 661 B2**
(45) Veröffentlichungstag und Bekanntmachung des Hinweises auf die Entscheidung über den Einspruch: **28.10.2020**
(45) Hinweis auf die Patenterteilung: 24.01.2018
(21) Anmeldenummer: 11752498.3
(22) Anmeldetag: 02.08.2011
(51) Int. Cl.: F24C 14/00, F24C 15/32, A21B 3/04

(54) **DAMPFGARGERÄTVORRICHTUNG**
STEAM COOKER
APPAREIL DE CUISSON À LA VAPEUR

(30) Priorität: 19.08.2010 DE 102010039515
(43) Veröffentlichungstag der Anmeldung: 26.06.2013
(73) Patentinhaber: BSH Hausgeräte GmbH, 81739 München (DE)
(72) Erfinder: HERBOLSHEIMER, Jochen, 83308 Trostberg (DE)
(74) Vertreter: Lang, Michael
(86) Internationale Anmeldenummer: PCT/EP2011/063267
(87) Internationale Veröffentlichungsnummer: WO 2012/022609

(56) Entgegenhaltungen:
- WO-A1-2005/047773
- DE-A1-102004 001 221
- DE-A1-102007 005 502
- DE-B3-102004 001 220
- DE-U1-202004 000 106
- JP-A- 2007 229 379
- JP-A- 2007 252 580
- JP-A- 2008 154 924
- US-A- 5 767 487
- US-A1- 2004 226 934

## Beschreibung

Die Erfindung geht aus von einer Dampfgargerätvorrichtung nach dem Oberbegriff des Anspruchs 1.

Aus der Druckschrift DE 10 2007 005 502 A1 ist eine Dampfgargerätvorrichtung mit einer einen Garraum begrenzenden Muffel und mit einem Dampferzeuger, der eine Verdampfungseinheit und eine Garraumentwässerungsvorrichtung aufweist, bekannt. Dokumente US5767487, JP2008154924 und JP2007229379 stellen darüber hinaus einen für die Erfindung relevanten Stand der Technik dar.

Die Aufgabe der Erfindung besteht insbesondere darin, eine gattungsgemäße Vorrichtung mit verbesserten Eigenschaften hinsichtlich eines Bedienerkomforts bereitzustellen.

Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Erfindung geht aus von einer Dampfgargerätvorrichtung mit einer einen Garraum begrenzenden Muffel und mit einem Dampferzeuger, der eine Verdampfungseinheit und eine Garraumentwässerungsvorrichtung aufweist.

Es wird vorgeschlagen, dass die Garraumentwässerungsvorrichtung eine aktiv schließbare Ventileinheit aufweist, die in zumindest einem Betriebszustand ein flüssiges Fluid zurückhält. Unter einem "Garraum" soll insbesondere ein Raum verstanden werden, der dazu vorgesehen ist, bei einem Garvorgang ein Gargut aufzunehmen. Vorzugsweise weist die Muffel eine insbesondere verschließbare Öffnung auf, durch die das Gargut in den Garraum einbringbar und entnehmbar ist. Insbesondere soll unter dem Begriff "Verdampfungseinheit" eine Einheit verstanden werden, die bei einem Betrieb ein Fluid erhitzt und dadurch einen Phasenübergang zumindest eines Teils des Fluids von einer flüssigen Phase in eine gasförmige Phase verursacht. Vorzugsweise ist das gasförmige Fluid dazu vorgesehen, in den Garraum eingeleitet zu werden. Unter "vorgesehen" soll insbesondere speziell programmiert, ausgelegt und/oder ausgestattet verstanden werden. Unter einer "Garraumentwässerungsvorrichtung" soll insbesondere eine Vorrichtung verstanden werden, die in zumindest einem Betriebszustand wenigstens ein flüssiges Fluid aus dem Garraum herausleitet. Vorzugsweise leitet die Garraumentwässerungsvorrichtung das Fluid an einer tiefsten Stelle des Garraums aus dem Garraum heraus. Vorteilhaft ist die Garraumentwässerungsvorrichtung dazu vorgesehen, das Fluid mittels einer Schwerkraft aus dem Garraum herauszuleiten. Unter einer "Ventileinheit" soll in diesem Zusammenhang insbesondere eine von außen schaltbare Einheit verstanden werden, die dazu vorgesehen ist, eine Entwässerung des Garraums, insbesondere von einer Steuereinheit gesteuert, zu verhindern. Vorzugsweise verbindet eine Entwässerungsleitung die Muffel über das Ventil mit dem Restwassertank. Unter der Wendung "aktiv schließbar" soll insbesondere verstanden werden, dass die Ventileinheit durch eine Steuereinheit und/oder durch einen Bediener verschließbar ausgebildet ist. Vorteilhaft ist ein Verschließen der Ventileinheit von einem gestauten Fluid unabhängig, das heißt insbesondere, dass die Ventileinheit nicht von einem gestauten Fluid öffenbar und/oder schließbar ist. Vorzugsweise weist die Ventileinheit dazu ein aktiv schließbares Ventil auf. Unter einem "Fluid" soll insbesondere eine Substanz verstanden werden, die einer beliebig langsamen Scherung keinen Widerstand entgegensetzt. Vorzugsweise ist das Fluid als eine Flüssigkeit und/oder als ein Gas ausgebildet. Unter "zurückhalten" soll verstanden werden, dass die Ventileinheit ein Abfließen des Fluids aus der Muffe verhindert. Durch die erfindungsgemäße Ausbildung der Dampfgargerätvorrichtung kann konstruktiv einfach ein in der Muffel kondensierendes Fluid je nach Betriebszustand in der Muffel belassen oder besonders einfach abgeleitet werden, wodurch insbesondere ein Fluidverbrauch gesenkt werden kann. Dadurch ist ein besonders hoher Bedienerkomfort möglich.

In einer weiteren Ausgestaltung wird vorgeschlagen, dass die Dampfgargerätvorrichtung ein Heizmittel, insbesondere eine Unterhitze, umfasst, das dazu vorgesehen ist, das zurückgehaltene Fluid, insbesondere zumindest teilweise in der Entwässerungsleitung und/oder vorteilhaft in der Muffel, zu verdampfen. Vorzugsweise ist die Verdampfungseinheit von dem Heizmittel getrennt ausgebildet. Unter einer "Unterhitze" soll insbesondere ein Heizelement verstanden werden, das auf einer Seite der Muffel angeordnet ist, die einer Aufstellfläche zugewandt ist. Vorzugsweise ist die Unterhitze dazu vorgesehen, den Garraum zu erhitzen. Durch das Heizmittel kann das zurückgehaltene Fluid konstruktiv einfach und mit wenig Aufwand verdampft werden, wodurch ein Verbrauch von Fluid minimiert werden kann.

Des Weiteren wird vorgeschlagen, dass der Dampferzeuger zumindest einen Wassertank aufweist, wodurch ein versorgungsnetzunabhängiger Betrieb möglich ist. Unter einem "Wassertank" soll insbesondere eine Einheit verstanden werden, die zumindest einen Auffangbereich zum Auffangen einer Flüssigkeit aufweist. Erfindungsgemäß weist der Dampferzeuger einen Restwassertank und einen Frischwassertank auf, wodurch eine besonders hohe Sicherheit bei einem großen Bedienkomfort erreicht werden kann. Insbesondere können ein entstehendes Restwasser und ein gebrauchtes Entkalkungsmittel von einem Frischwasser getrennt gesammelt werden. Unter einem "Restwassertank" soll insbesondere ein Tank verstanden werden, der einen Auffangbereich begrenzt, der von einem Auffangbereich getrennt ist, der von einem Frischwassertank begrenzt ist. Vorzugsweise fängt der Restwassertank bei einem Garbetrieb zumindest einen Teil eines aus dem Garraum kommenden Fluids und/oder bei einer Entkalkung ein Entkalkungsmittel auf. Vorzugsweise sind der Restwassertank und der Frischwassertank bei einem ordnungsgemäßen Betrieb wasserdicht, besonders bevorzugt gasdicht, getrennt. Vorzugsweise nimmt der Restwassertank in zumindest einem Betriebszustand ein Fluid auf. Unter einem "Frischwassertank" soll insbesondere ein Tank verstanden werden, der dazu vorgesehen ist, von außen mit einem Fluid, insbesondere mit Wasser und/oder mit einem Reinigungsfluid, befüllt zu werden. Vorzugsweise entnimmt eine Pumpe das Fluid in zumindest einem Betriebszustand aus dem Frischwassertank.

Weiterhin wird vorgeschlagen, dass die Garraumentwässerungsvorrichtung eine Entwässerungsleitung aufweist, die dazu vorgesehen ist, ein Fluid von dem Garraum in den Wassertank, vorteilhaft in den Restwassertank, zu leiten, wodurch ein kondensiertes Fluid komfortabel und unabhängig von einem Entsorgungsnetz aus der Muffel entfernt werden kann. Unter einer "Entwässerungsleitung" soll insbesondere eine Vorrichtung verstanden werden, die zumindest flüssiges Fluid aus dem Garraum herausleitet.

Ferner wird vorgeschlagen, dass der Wassertank, vorteilhaft der Restwassertank, zumindest teilweise unter einer Dampfeinlassöffnung der Muffel angeordnet ist, wodurch der Muffel viel Bauraum, insbesondere auf einer horizontalen Ebene, zur Verfügung steht und wodurch eine konstruktiv einfache Entwässerung der Muffel und der Verdampfungseinheit erreicht werden kann. Insbesondere können Zubehörteile, wie Backbleche mit normierten Abmessungen, verwendet werden. Unter der Wendung "unter einer Dampfeinlassöffnung der Muffel angeordnet" soll insbesondere verstanden werden, dass der Wassertank zumindest teilweise zwischen einer von einer Aufstellfläche des Dampfgargeräts aufgespannten Ebene und einer parallelen Ebene angeordnet ist, die die Dampfeinlassöffnung der Muffel schneidet. Dabei soll unter "zumindest teilweise" wenigstens 25 %, vorteilhaft wenigstens 50 %, eines Auffangbereichs des Wassertanks und besonders vorteilhaft der gesamte Auffangbereich des Wassertanks verstanden werden. Vorzugsweise ist der Auffangbereich des Wassertanks unter einer untersten Ebene angeordnet, die die Muffel schneidet und die parallel zu der Aufstellfläche ausgerichtet ist.

Zudem wird vorgeschlagen, dass der Wassertank, vorteilhaft der Frischwassertank, zumindest teilweise unter der Muffel angeordnet ist, wodurch der Muffel viel Bauraum, insbesondere auf einer horizontalen Ebene, zur Verfügung steht.

Weiterhin wird vorgeschlagen, dass zumindest der Wassertank, vorteilhaft der Restwassertank, eine Füllstandserkennung aufweist. Unter einer "Füllstandserkennung" soll insbesondere eine Vorrichtung verstanden werden, die zumindest eine von einer Menge eines Fluids in dem Auffangbereichs des Restwassertanks abhängige Kenngröße erfasst. Vorzugsweise weist der Frischwassertank eine Füllstandserkennung auf. Durch die Füllstandserkennung ist ein besonders zuverlässiger und komfortabler Betrieb möglich.

In einer vorteilhaften Ausbildung der Erfindung wird vorgeschlagen, dass der Dampferzeuger zumindest eine Tankerkennung aufweist, wodurch ein besonders zuverlässiger Betrieb möglich ist. Unter einer "Tankerkennung" soll insbesondere eine Vorrichtung verstanden werden, die in zumindest einem Betriebszustand eine Kenngröße generiert, die zumindest eine Information über eine Anordnung des Frischwassertanks und/oder vorteilhaft des Restwassertanks, aufweist. Vorzugsweise weist die Kenngröße eine Information über eine ordnungsgemäße Anordnung des Frischwassertanks und/oder vorteilhaft des Restwassertanks für einen Betrieb auf.

Des Weiteren wird vorgeschlagen, dass die Dampfgargerätvorrichtung einen Garraumbypass aufweist, der dazu vorgesehen ist, ein Fluid von einem Dampfausgang der Verdampfungseinheit abzuleiten. Insbesondere soll unter einem "Dampfausgang der Verdampfungseinheit" eine Öffnung der Verdampfungseinheit verstanden werden, durch die bei einem Dampfgarbetrieb ein Dampf von der Verdampfungseinheit in Richtung des Garraums austritt. Insbesondere soll unter dem Begriff "Garraumbypass" eine Leitung verstanden werden, die wirkungsmäßig parallel zu einem durch den Garraum verlaufenden Leitungsweg verläuft und dabei den Garraum umgeht. Vorteilhaft verläuft der Garraumbypass von einem Dampfausgang der Verdampfungseinheit zu einem Abfluss, insbesondere in ein Entsorgungsnetz, zu dem Frischwassertank und/oder vorteilhaft zu dem Restwassertank. Dadurch können konstruktiv einfach eine besonders komfortable Bedienung und eine effiziente Reinigung erreicht werden. Insbesondere kann mit geringem Aufwand der Dampferzeuger vor jedem Dampfgarbetrieb vorteilhaft gespült werden.

In einer weiteren Ausgestaltung wird vorgeschlagen, dass der Dampferzeuger eine Ventileinheit aufweist, die zumindest dazu vorgesehen ist, das Fluid von dem Dampfausgang entweder in den Garraum oder durch den Garraumbypass abzuleiten. Unter einer "Ventileinheit" soll insbesondere eine Einheit verstanden werden, die zumindest ein Ventil aufweist. Vorzugsweise weist die Ventileinheit ein zumindest 2-Wege-Ventil auf. Zusätzlich oder vorteilhaft alternativ könnte die Ventileinheit zwei Ventile aufweisen, die jeweils einseitig wirkungsmäßig mit dem Dampferzeuger verbunden sind. Unter der Wendung "entweder in den Garraum oder durch den Garraumbypass" soll insbesondere verstanden werden, dass die Ventileinheit zumindest eine Ventilstellung aufweist, bei der die Ventileinheit das Fluid nur in den Garraum leitet, und eine weitere Ventilstellung aufweist, bei der die Ventileinheit das Fluid nur durch den Garraumbypass leitet. Durch die Ventileinheit ist einerseits eine effiziente Reinigung und andererseits ein effizienter Dampfgarbetrieb möglich, insbesondere, indem in einem Betriebszustand ein nicht erwünschtes Eindringen von Fluid in einen Bereich der Dampfgargerätvorrichtung verhindert werden kann. Beispielsweise kann ein Eindringen von Entkalkungsmittel in den Garraum vermieden werden.

Des Weiteren wird vorgeschlagen, dass die Dampfgargerätvorrichtung eine Regel- und/oder Steuereinheit aufweist, die dazu vorgesehen ist, zumindest bei einem Entkalken und/oder Reinigen das Fluid mittels der Ventileinheit über den Garraumbypass abzuleiten, wodurch ein besonders komfortabler Betrieb erreicht werden kann. Insbesondere kann die Regel- und/oder Steuereinheit Bedienereingaben verarbeiten. Unter einer "Regel- und/oder Steuereinheit" soll insbesondere eine Einheit mit zumindest einem Steuergerät verstanden werden. Vorzugsweise weist das Steuergerät zumindest eine Prozessoreinheit und eine Speichereinheit und ein in der Speichereinheit gespeichertes Betriebsprogramm auf. Insbesondere soll unter der Wendung "bei einem Entkalken und/oder Reinigen" ein Vorgang verstanden werden, bei dem ein Fluid einen Schmutz und/oder Kalk aus der Verdampfungseinheit heraustransportiert.

Der Dampferzeuger umfasst zumindest eine Leitung, die in zumindest einem Betriebszustand ein Fluid von dem Restwassertank zu der Verdampfungseinheit führt, wodurch konstruktiv einfach ein besonders komfortables und sicheres Entkalkungsprogramm möglich ist. Insbesondere kann dadurch ein Entkalkungsmittel in den Restwassertank eingefüllt werden, wodurch eine Verunreinigung des Frischwassertanks ausgeschlossen ist und ein Nachfüllen von Frischwasser in den Frischwassertank zwischen Entkalken und Spülen entfällt.

Der Dampferzeuger weist eine Ventileinheit auf, die dazu vorgesehen ist, zwischen einer Zuleitung zu der Verdampfungseinheit von dem Restwassertank und einer Zuleitung zu der Verdampfungseinheit von dem Frischwassertank umzuschalten, wodurch eine besonders komfortable Entkalkung und/oder ein besonders komfortabler Dampfgarbetrieb erreicht werden können, insbesondere, weil der Restwassertank als Reserve dienen kann. Vorzugsweise weist die Ventileinheit ein zumindest 2-Wege-Ventil auf. Zusätzlich oder vorteilhaft alternativ könnte die Ventileinheit zwei Ventile aufweisen, die jeweils einseitig wirkungsmäßig mit dem Dampferzeuger verbunden sind.

Es zeigen:
- Fig. 1: eine Frontalansicht eines Dampfgargeräts mit einer erfindungsgemäßen Dampfgargerätvorrichtung,
- Fig. 2: eine schematische Darstellung der Dampfgargerätvorrichtung aus Fig. 1 mit einer Garraumentwässerung und
- Fig. 3: eine schematische Darstellung der Garraumentwässerung aus Fig. 2.

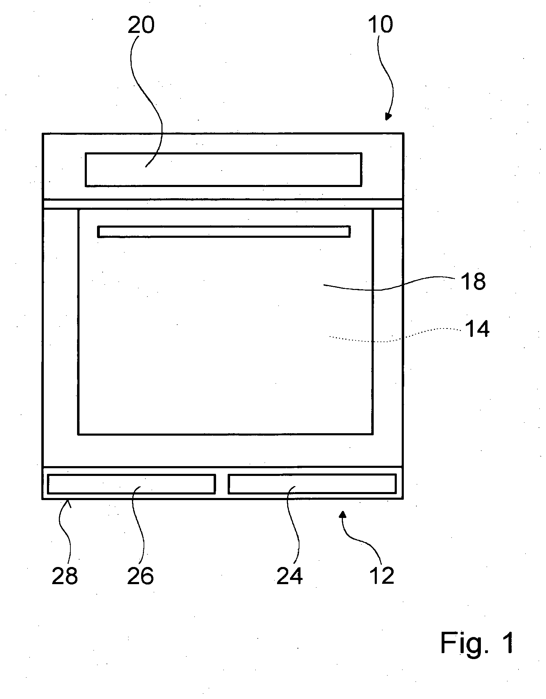

Fig. 1 zeigt ein Dampfgargerät 10 mit einer Dampfgargerätvorrichtung 12. Das Dampfgargerät 10 ist als ein Dampfbackofen ausgebildet. Die Dampfgargerätvorrichtung 12 weist eine einen Garraum 14 begrenzende Muffel 16, eine Garraumtür 18, eine Bedienerschnittstelle 20 und einen Dampferzeuger 22 auf. Der Dampferzeuger 22 weist einen Restwassertank 24 und einen Frischwassertank 26 auf. Der Restwassertank 24 und der Frischwassertank 26 sind unter der Muffel 16 angeordnet, und zwar zwischen einer Aufstellfläche 28 des Dampfgargeräts 10 und der Muffel 16. Der Restwassertank 24 und der Frischwassertank 26 sind als Schubfächer ausgebildet. Sie sind von einem nicht näher dargestellten Bediener herausziehbar gelagert. Dabei sind sie bei einer geschlossenen Garraumtür 18 unter der Garraumtür 18 angeordnet. Alternativ könnten ein Restwassertank und ein Frischwassertank hinter der Garraumtür 18 angeordnet sein und insbesondere nur bei geöffneter Garraumtür 18 entnehmbar sein. Der Restwassertank 24 und der Frischwassertank 26 weisen ein dem Fachmann als sinnvoll erscheinendes Fassungsvolumen auf. Der Restwassertank 24 und der Frischwassertank 26 weisen unterschiedliche Fassungsvolumen auf. Dabei ist der Frischwassertank 26 größer als der Restwassertank 24. Eine Pumpe 30 des Dampferzeugers 22 ist ebenfalls unter der Muffel 16 angeordnet. Alternativ oder zusätzlich könnte die Pumpe 30 hinter der Muffel 16, das heißt auf einer der Garraumtür 18 abgewandten Seite der Muffel 16, angeordnet sein.

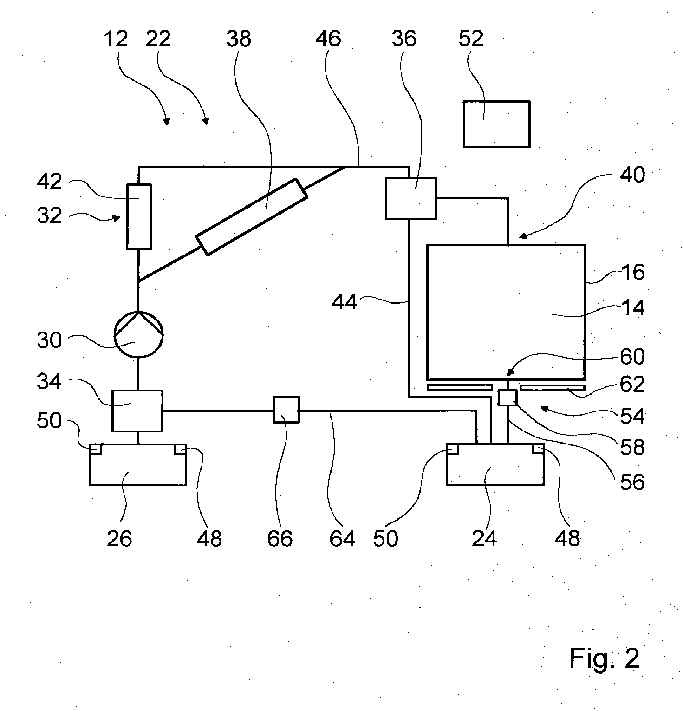

Fig. 2 zeigt insbesondere den Dampferzeuger 22 in einer schematischen Darstellung. Der Dampferzeuger 22 weist eine Verdampfungseinheit 32, die Pumpe 30, eine erste Ventileinheit 34 und eine zweite Ventileinheit 36 auf. Bei einem Dampfgarbetrieb saugt die Pumpe 30 ein Fluid, in diesem Fall Wasser, aus dem Frischwassertank 26 durch die erste Ventileinheit 34. Die Pumpe 30 leitet das Fluid in die Verdampfungseinheit 32. Ein Heizmittel 38 der Verdampfungseinheit 32 verdampft das Fluid. Bei einem Dampfgarbetrieb leitet die zweite Ventileinheit 36 den Dampf durch eine Dampfeinlassöffnung 40 der Muffel 16 in die Muffel 16, das heißt in den Garraum 14. Die Verdampfungseinheit 32 weist eine Füllstandserfassung 42 auf. Die Füllstandserfassung 42 erfasst eine Kenngröße über einen Füllstand des Fluids in dem Heizmittel 38.

Zudem weist der Dampferzeuger 22 einen Garraumbypass 44 auf. Bei einer Entkalkung leitet die zweite Ventileinheit 36 ein Fluid, in diesem Fall ein Entkalkungsmittel, in den Garraumbypass 44 anstelle in die Muffel 16. Der Garraumbypass 44 leitet das Fluid von einem Dampfausgang 46 der Verdampfungseinheit 32 direkt in den Restwassertank 24. Dabei bewegt die Schwerkraft das Fluid. Bei der Entkalkung verschließt die zweite Ventileinheit 36 einen Leitungsweg zu der Dampfeinlassöffnung 40 der Muffel 16. Bei einem Dampfgarbetrieb verschließt die zweite Ventileinheit 36 einen Leitungsweg durch den Garraumbypass 44 und öffnet einen Leitungsweg zu der Dampfeinlassöffnung 40 der Muffel 16. Somit leitet die zweite Ventileinheit 36 das Fluid von der Verdampfungseinheit 32 bei einem Dampfgarbetrieb nur in den Garraum 14 und bei einer Entkalkung durch den Garraumbypass 44 nur in den Restwassertank 24. Alternativ oder zusätzlich könnte bei einem Dampfgarbetrieb kondensiertes Fluid durch den Garraumbypass 44 abgeleitet werden. Die zweite Ventileinheit 36 ist als ein Drei-Wege-Ventil ausgebildet.

Der Restwassertank 24 und der Frischwassertank 26 weisen jeweils eine Füllstandserkennung 48 auf. Die Füllstandserkennung 48 erfasst eine Kenngröße, die einen Füllstand des jeweiligen Tanks 24, 26 umfasst. Die Füllstandserkennung 48 des Frischwassertanks 26 erfasst zumindest, wenn ein Auffangbereich des Frischwassertanks 26 leer ist. Die Füllstandserkennung 48 des Restwassertanks 24 erfasst zumindest, wenn ein Auffangbereich des Restwassertanks 24 voll ist. Zudem weist der Dampferzeuger 22 zwei Tankerkennungen 50 auf. Die Tankerkennungen 50 stellen Kenngrößen bereit, die beschreiben, ob der Frischwassertank 26 oder der Restwassertank 24 ordnungsgemäß in das Dampfgargerät 10 eingesetzt sind.

Das Dampfgargerät 10 weist eine Regel- und/oder Steuereinheit 52 auf. Die Regel- und/oder Steuereinheit 52 ist über nicht näher dargestellte Leitungen mit der Bedienerschnittstelle 20, mit der Pumpe 30, mit der ersten Ventileinheit 34, mit der zweiten Ventileinheit 36, mit dem Heizmittel 38, mit der Füllstandserfassung 42, mit den Füllstandserkennungen 48 und mit den Tankerkennungen 50 verbunden. Zudem steuert die Regel- und/oder Steuereinheit 52 einen zeitlichen Ablauf des Dampfgarbetriebs und der Entkalkung. Dabei leitet die Regel- und/oder Steuereinheit 52 bei einem Entkalken und/oder Reinigen das Fluid mittels der zweiten Ventileinheit 36 von der Verdampfungseinheit 32 direkt zu dem Restwassertank 24. Der Bediener kann mittels der Bedienerschnittstelle 20 ein Wirken der Regel- und/oder Steuereinheit 52 beeinflussen. Zudem zeigt die Regel- und/oder Steuereinheit 52 dem Bediener über die Bedienerschnittstelle 20 an, wenn eine Handlung von Seiten des Bedieners nötig ist, beispielsweise bei einem Entkalken.

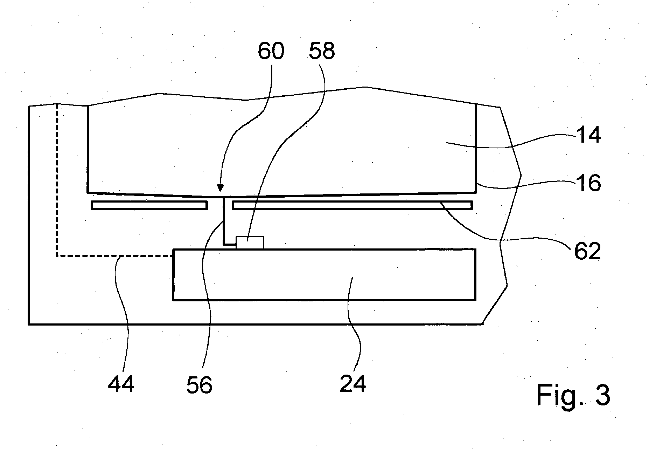

Des Weiteren weist der Dampferzeuger 22 eine in Fig. 3 näher dargestellte Garraumentwässerungsvorrichtung 54 auf. Die Garraumentwässerungsvorrichtung 54 umfasst eine Entwässerungsleitung 56 und eine Ventileinheit 58. Die Entwässerungsleitung 56 verbindet eine tiefste Stelle 60 der Muffel 16 über die Ventileinheit 58 mit dem Restwassertank 24. Die Ventileinheit 58 verschließt bei einem Dampfgarbetrieb von der Regel- und/oder Steuereinheit 52 aktiv angesteuert die Entwässerungsleitung 56. Dadurch sammelt sich kondensierter Dampf in der Muffel 16. Dieser kann mittels einer Unterhitze 62 des Dampfgargeräts 10 wieder verdampft werden. Außerdem kann die Regel- und/oder Steuereinheit 52 mittels der Ventileinheit 58 die Entwässerungsleitung 56 öffnen. Dann fließt das kondensierte Fluid durch die Schwerkraft in den Restwassertank 24. Alternativ oder zusätzlich zu der Entwässerungsleitung 56 könnte die Muffel 16 andere, dem Fachmann als sinnvoll erscheinende Ausgänge für ein Fluid aufweisen. Zwischen der Unterhitze 62 und dem Restwassertank 24 ist eine nicht näher dargestellte thermische Isolierung angeordnet.

Der Dampferzeuger 22 umfasst eine Leitung 64, die bei einem Entkalken oder bei einem Dampfgarbetrieb ein Fluid, hier ein Entkalkungsmittel oder Wasser, von dem Restwassertank 24 zu der Verdampfungseinheit 32 führt. Dazu ist diese Leitung mit der ersten Ventileinheit 34 verbunden. Die Pumpe 30 saugt das Fluid aus dem Restwassertank 24 und gibt es an die Verdampfungseinheit 32 ab. Das Fluid fließt bei dem Entkalken von der Verdampfungseinheit 32 mittels der Schwerkraft durch den Garraumbypass 44 in den Restwassertank 24 zurück. Bei einem Dampfgarbetrieb dient der Restwassertank 24 als Reserve und als Teil eines Kreislaufs für den Dampfgarbetrieb. Dabei gelangt das Fluid von der Verdampfungseinheit 32 über den Garraum 14 zurück in den Restwassertank 24.

Die Leitung 64 bildet somit einen Teil eines Kreislaufs des Fluids durch die Verdampfungseinheit 32, einen Garraum 14 und den Restwassertank 24. Die Leitung 64 weist einen Filter 66 auf. Der Filter 66 reinigt das Fluid, bevor es in die Verdampfungseinheit 32 gelangt. Somit bildet der Filter 66 einen Teil des Kreislaufs. Der Filter 66 wird mit einem Fluid gereinigt, das von der Verdampfungseinheit 32 zurück in den Restwassertank 24 strömt oder gepumpt wird. Nach dem Entkalken schaltet die Regel- und/oder Steuereinheit 52 die erste Ventileinheit 34 um und spült die Verdampfungseinheit 32 mit Frischwasser aus dem Frischwassertank 26. Zusätzlich spült die Regel- und/oder Steuereinheit 52 die Verdampfungseinheit 32 unmittelbar vor einem Dampfgarbetrieb. Alternativ oder zusätzlich könnte die Pumpe 30 ein Entkalkungsmittel aus dem Frischwassertank 26 ansaugen.

### Bezugszeichen

| | | | |
|---|---|---|---|
| 10 | Dampfgargerät | 60 | Stelle |
| 12 | Dampfgargerätvorrichtung | 62 | Unterhitze |
| 14 | Garraum | 64 | Leitung |
| 16 | Muffel | 66 | Filter |
| 18 | Garraumtür | | |
| 20 | Bedienerschnittstelle | | |
| 22 | Dampferzeuger | | |
| 24 | Restwassertank | | |
| 26 | Frischwassertank | | |
| 28 | Aufstellfläche | | |
| 30 | Pumpe | | |
| 32 | Verdampfungseinheit | | |
| 34 | erste Ventileinheit | | |
| 36 | zweite Ventileinheit | | |
| 38 | Heizmittel | | |
| 40 | Dampfeinlassöffnung | | |
| 42 | Füllstandserfassung | | |
| 44 | Garraumbypass | | |
| 46 | Dampfausgang | | |
| 48 | Füllstandserkennung | | |
| 50 | Tankerkennungen | | |
| 52 | Regel- und/oder Steuereinheit | | |
| 54 | Garraumentwässerungsvorrichtung | | |
| 56 | Entwässerungsleitung | | |
| 58 | Ventileinheit | | |

## Patentansprüche

1. Dampfgargerätvorrichtung (12) mit einer einen Garraum (14) begrenzenden Muffel (16) und mit einem Dampferzeuger (22), der eine Verdampfungseinheit (32) und eine Garraumentwässerungsvorrichtung (54) aufweist, wobei die Garraumentwässerungsvorrichtung (54) eine aktiv schließbare Ventileinheit (58) aufweist, die in zumindest einem Betriebszustand ein flüssiges Fluid zurückhält, wobei die Ventileinheit (58) ein Abfließen des Fluids aus der Muffel (16) verhindert, wobei der Dampferzeuger (22) einen Restwassertank (24) und einen Frischwassertank (26) aufweist, und wobei die Garraumentwässerungsvorrichtung (54) eine Entwässerungsleitung (56) aufweist, die dazu vorgesehen ist, ein Fluid von dem Garraum (14) in den Restwassertank (24) zu leiten, wobei der Dampferzeuger (22) zumindest eine Leitung (64) umfasst, die in zumindest einem Betriebszustand ein Fluid von dem Restwassertank (24) zu der Verdampfungseinheit (32) führt, und wobei der Dampferzeuger (22) eine Ventileinheit (34) aufweist, die dazu vorgesehen ist, zwischen einer Zuleitung zu der Verdampfungseinheit (32) von dem Restwassertank (24) und einer Zuleitung zu der Verdampfungseinheit (32) von dem Frischwassertank (26) umzuschalten.

2. Dampfgargerätvorrichtung nach Anspruch 1, **gekennzeichnet durch** ein Heizmittel (62), das dazu vorgesehen ist, das zurückgehaltene Fluid zu verdampfen.

3. Dampfgargerätvorrichtung nach einem der vorhergehenden Ansprüche, **dadurch gekennzeichnet, dass** der Restwassertank (24) zumindest teilweise unter einer Dampfeinlassöffnung (40) der Muffel (16) angeordnet ist.

4. Dampfgargerätvorrichtung nach einem der vorhergehenden Ansprüche, **dadurch gekennzeichnet, dass** der Frischwassertank (26) zumindest teilweise unter der Muffel (16) angeordnet ist.

5. Dampfgargerätvorrichtung nach einem der vorhergehenden Ansprüche, **dadurch gekennzeichnet, dass** zumindest der Restwassertank (24).eine Füllstandserkennung aufweist.

6. Dampfgargerätvorrichtung nach einem der vorhergehenden Ansprüche, **dadurch gekennzeichnet, dass** der Dampferzeuger (22) zumindest eine Tankerkennung (50) aufweist.

7. Dampfgargerätvorrichtung nach einem der vorhergehenden Ansprüche, **gekennzeichnet durch** einen Garraumbypass (44), der dazu vorgesehen ist, ein Fluid von einem Dampfausgang (46) der Verdampfungseinheit (32) abzuleiten.

8. Dampfgargerätvorrichtung nach Anspruch 7, **dadurch gekennzeichnet, dass** der Dampferzeuger (22) eine Ventileinheit (36) aufweist, die zumindest dazu vorgesehen ist, das Fluid von dem Dampfausgang (46) entweder in den Garraum (14) oder durch den Garraumbypass (44) abzuleiten.

9. Dampfgargerätvorrichtung zumindest nach Anspruch 7, **gekennzeichnet durch** eine Regel- und/oder Steuereinheit (52), die dazu vorgesehen ist, zumindest bei einem Entkalken und/oder Reinigen das Fluid mittels der Ventileinheit (36) über den Garraumbypass (44) abzuleiten.

10. Dampfgargerät mit einer Dampfgargerätvorrichtung (12) nach einem der vorhergehenden Ansprüche.

## Claims

1. Steam cooker device (12) with a muffle (16) which delimits a cooking compartment (14) and with a steam generator (22) having an evaporation unit (32) and a cooking compartment drainage device (54), wherein the cooking compartment drainage device (54) has an actively closable valve unit (58) which retains a liquid fluid in at least one operating state, wherein the valve unit (58) prevents the fluid from flowing out of the muffle (16), wherein the steam generator (22) has a remaining water tank (24) and a fresh water tank (26), and wherein the cooking compartment drainage device (54) has a drainage pipe (56) which is provided to channel a fluid from the cooking compartment (14) into the remaining water tank (24), wherein the steam generator (22) comprises at least one pipe (64) which, in at least one operating state, channels a fluid from the remaining water tank (24) to the evaporation unit (32), and wherein the steam generator (22) has a valve unit (34) which is provided to switch between a feed pipe to the evaporation unit (32) from the remaining water tank (24) and a feed pipe to the evaporation unit (32) from the fresh water tank (26).

2. Steam cooker device according to claim 1, **characterised by** a heating means (62) which is provided to evaporate the retained fluid.

3. Steam cooker device according to one of the preceding claims, **characterised in that** the remaining water tank (24) is arranged at least partially below a steam inlet opening (40) of the muffle (16).

4. Steam cooker device according to one of the preceding claims, **characterised in that** the fresh water tank (26) is arranged at least partially below the muffle (16).

5. Steam cooker device according to one of the preceding claims, **characterised in that** at least the remaining water tank (24) has a fill level detection.

6. Steam cooker device according to one of the preceding claims, **characterised in that** the steam generator (22) has at least one tank detection (50).

7. Steam cooker device according to one of the preceding claims, **characterised by** a cooking compartment bypass (44) which is provided to channel off a fluid from a steam outlet (46) of the evaporation unit (32).

8. Steam cooker device according to claim 7, **characterised in that** the steam generator (22) has a valve unit (36) which is at least provided to channel off the fluid from the steam outlet (46) either into the cooking compartment (14) or via the cooking compartment bypass (44).

9. Steam cooker device at least according to claim 7, **characterised by** a regulation and/or control unit (52) which is provided to channel off the fluid by way of the valve unit (36) via the cooking compartment bypass (44) at least during decalcification and/or cleaning.

10. Steam cooker with a steam cooker device (12) according to one of the preceding claims.

## Revendications

1. Dispositif d'appareil de cuisson à la vapeur (12) comprenant un moufle (16) délimitant un espace de cuisson (14) et comprenant un générateur de vapeur (22) qui présente une unité d'évaporation (32) et un dispositif de drainage de l'espace de cuisson (54), le dispositif de drainage de l'espace de cuisson (54) présentant une unité de vanne (58) pouvant être fermée activement, laquelle, dans au moins un état de fonctionnement, retient un fluide liquide, l'unité de vanne (58) empêchant un écoulement du fluide hors du moufle (16), le générateur de vapeur (22) présentant un réservoir d'eau résiduelle (24) et un réservoir d'eau fraîche (26), et le dispositif de drainage de l'espace de cuisson (54) présentant une conduite de drainage (56) qui est ménagée pour conduire un fluide de l'espace de cuisson (14) dans le réservoir d'eau résiduelle (24), le générateur de vapeur (22) comprenant au moins une conduite (64), laquelle, dans au moins un état de fonctionnement, conduit un fluide du réservoir d'eau résiduelle (24) vers l'unité d'évaporation (32), et le générateur de vapeur (22) présentant une unité de vanne (34) qui est ménagée pour commuter entre une conduite d'alimentation allant vers l'unité d'évaporation (32) du réservoir d'eau résiduelle (24) et une conduite d'alimentation allant vers l'unité d'évaporation (32) du réservoir d'eau fraîche (26).

2. Dispositif d'appareil de cuisson à la vapeur selon la revendication 1, **caractérisé par** un moyen de chauffage (62) qui est ménagé pour évaporer le fluide retenu.

3. Dispositif d'appareil de cuisson à la vapeur selon l'une quelconque des revendications précédentes, **caractérisé en ce que** le réservoir d'eau résiduelle (24) est disposé au moins en partie en dessous d'une ouverture d'entrée de vapeur (40) du moufle (16).

4. Dispositif d'appareil de cuisson à la vapeur selon l'une quelconque des revendications précédentes, **caractérisé en ce que** le réservoir d'eau fraîche (26) est disposé au moins en partie en dessous du moufle (16).

5. Dispositif d'appareil de cuisson à la vapeur selon l'une quelconque des revendications précédentes, **caractérisé en ce qu'**au moins le réservoir d'eau résiduelle (24) présente un dispositif d'identification du niveau de remplissage.

6. Dispositif d'appareil de cuisson à la vapeur selon l'une quelconque des revendications précédentes, **caractérisé en ce que** le générateur de vapeur (22) présente au moins un dispositif d'identification de réservoir (50).

7. Dispositif d'appareil de cuisson à la vapeur selon l'une quelconque des revendications précédentes, **caractérisé par** un bypass d'espace de cuisson (44) qui est ménagé pour dériver un fluide d'une sortie de vapeur (46) de l'unité d'évaporation (32).

8. Dispositif d'appareil de cuisson à la vapeur selon la revendication 7, **caractérisé en ce que** le générateur de vapeur (22) présente une unité de vanne (36) qui est au moins ménagée pour dériver le fluide de la sortie de vapeur (46) soit dans l'espace de cuisson (14) ou à travers le bypass d'espace de cuisson (44).

9. Dispositif d'appareil de cuisson à la vapeur au moins selon la revendication 7, **caractérisé par** une unité de régulation et/ou de commande (52) qui est ménagée, au moins lors d'un détartrage et/ou d'un nettoyage, pour dériver le fluide par l'intermédiaire du bypass d'espace de cuisson (44) au moyen de l'unité de vanne (36).

10. Appareil de cuisson à la vapeur comprenant un dispositif d'appareil de cuisson à la vapeur (12) selon l'une quelconque des revendications précédentes.
